# EUROPEAN PATENT SPECIFICATION

(11) **EP 2 127 202 B1**
(45) Date of publication and mention of the grant of the patent: **25.05.2016**
(21) Application number: 07712337.0
(22) Date of filing: 27.02.2007
(51) Int. Cl.: H04L 12/14, H04L 29/08

(54) **METHOD AND APPARATUS FOR USE IN A COMMUNICATIONS NETWORK**
VERFAHREN UND VORRICHTUNG ZUR VERWENDUNG IN EINEM KOMMUNIKATIONSNETZ
MÉTHODE ET APPAREIL S'UTILISANT DANS UN RÉSEAU DE COMMUNICATION

(43) Date of publication of application: 02.12.2009
(73) Proprietor: Telefonaktiebolaget LM Ericsson (publ), 164 83 Stockholm (SE)
(72) Inventor: DAHL, Jan, S-125 56 Älvsjö (SE)
(74) Representative: Lind, Robert
(86) International application number: PCT/EP2007/051848
(87) International publication number: WO 2008/104219

(56) References cited:
- WO-A-2004/045195
- "Universal Mobile Telecommunications System (UMTS); Telecommunication management; Charging management; IP Multimedia Subsystem (IMS) charging (3GPP TS 32.260 version 6.7.0 Release 6); ETSI TS 132 260" ETSI STANDARDS, EUROPEAN TELECOMMUNICATIONS STANDARDS INSTITUTE, SOPHIA-ANTIPO, FR, vol. 3-SA5, no. V670, September 2006 (2006-09), XP014035701 ISSN: 0000-0001

## Description

### BACKGROUND OF THE INVENTION

### 1. Field of the Invention

The present invention relates to a method and apparatus for use in a communications network, for example a Universal Mobile Telecommunications System having an IP Multimedia Subsystem.

### 2. Description of the Related Art

IP Multimedia services provide a dynamic combination of voice, video, messaging, data, etc. within the same session. By growing the number of basic applications and the media which it is possible to combine, the number of services offered to the end users will grow, and the inter-personal communication experience will be enriched. This will lead to a new generation of personalised, rich multimedia-communication services, including so-called "combinational IP Multimedia" services.

The UMTS (Universal Mobile Telecommunications System) is a third generation wireless system designed to provide higher data rates and enhanced services to subscribers. UMTS is a successor to the Global System for Mobile Communications (GSM), with an important evolutionary step between GSM and UMTS being the General Packet Radio Service (GPRS). GPRS introduces packet switching into the GSM core network and allows direct access to packet data networks (PDNs). This enables high-data rate packets switch transmissions well beyond the 64 kbps limit of ISDN through the GSM call network, which is a necessity for UMTS data transmission rates of up to 2 Mbps. UMTS is standardised by the 3^{rd} Generation Partnership Project (3GPP) which is a conglomeration of regional standards bodies such as the European Telecommunication Standards Institute (ETSI), the Association of Radio Industry Businesses (ARIB) and others. See 3GPP TS 23.002 for more details.

The UMTS architecture includes a subsystem known as the IP Multimedia Subsystem (IMS) for supporting traditional telephony as well as new IP multimedia services (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the use of standardised IMS Service Enablers, which facilitate new rich person-to-person (client-to-client) communication services as well as person-to-content (client-to-server) services over IP-based networks. The IMS is able to connect to both PSTN/ISDN (Public Switched Telephone Network/Integrated Services Digital Network) as well as the Internet.

The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. The 3GPP has chosen SIP for signalling between a User Equipment (UE) and the IMS as well as between the components within the IMS.

Specific details of the operation of the UMTS communications network and of the various components within such a network can be found from the Technical Specifications for UMTS that are available from http://www.3gpp.org. Further details of the use of SIP within UMTS can be found from the 3GPP Technical Specification TS 24.228 V5.8.0 (2004-03).

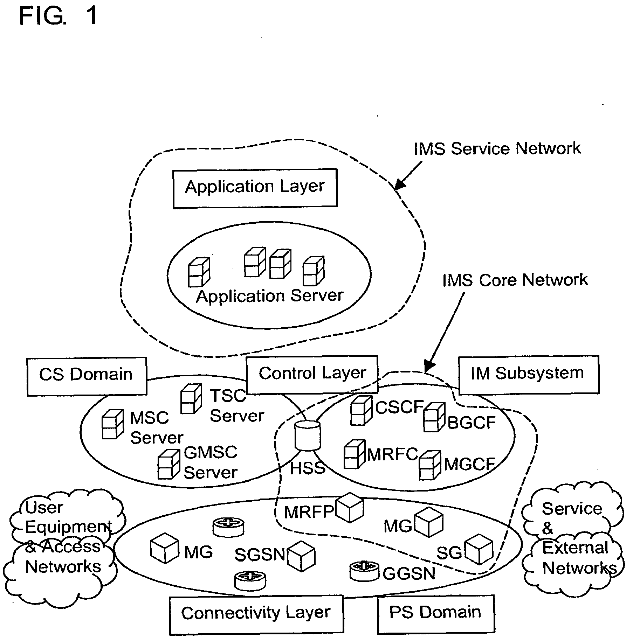

Figure 1 of the accompanying drawings illustrates schematically how the IMS fits into the mobile network architecture in the case of a GPRS/PS access network (IMS can of course operate over other access networks). Call/Session Control Functions (CSCFs) operate as SIP proxies within the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A user registers with the IMS using the specified SIP REGISTER method. This is a mechanism for attaching to the IMS and announcing to the IMS the address at which a SIP user identity can be reached. In 3GPP, when a SIP terminal performs a registration, the IMS authenticates the user, and allocates a S-CSCF to that user from the set of available S-CSCFs. Whilst the criterion for allocating S-CSCFs is not specified by 3GPP, these may include load sharing and service requirements. It is noted that the allocation of an S-CSCF is key to controlling (and charging for) user access to IMS-based services. Operators may provide a mechanism for preventing direct user-to-user SIP sessions which would otherwise bypass the S-CSCF.

During the registration process, it is the responsibility of the I-CSCF to select a S-CSCF if a S-CSCF is not already selected. The I-CSCF receives the required S-CSCF capabilities from the home network's Home Subscriber Server (HSS), and selects an appropriate S-CSCF based on the received capabilities. [It is noted that S-CSCF allocation is also carried out for a user by the I-CSCF in the case where the user is called by another party, and the user is not currently allocated an S-CSCF.] When a registered user subsequently sends a session request to the IMS, the P-CSCF is able to forward the request to the selected S-CSCF based on information received from the S-CSCF during the registration process.

Within the IMS service network, Application Servers (ASs) are provided for implementing IMS service functionality. Application Servers provide services to end-users in an IMS system, and may be connected either as end-points over the 3GPP defined Mr interface, or "linked in" by an S-CSCF over the 3GPP defined ISC interface. In the latter case, Initial Filter Criteria (IFC) are used by an S-CSCF to determine which Applications Servers should be "linked in" during a SIP Session establishment. Different IFCs may be applied to different call cases. The IFCs are received by the S-CSCF from an HSS during the IMS registration procedure as part of a user's User Profile. Certain Application Servers will perform actions dependent upon subscriber identities (either the called or calling subscriber, whichever is "owned" by the network controlling the Application Server). For example, in the case of call forwarding, the appropriate (terminating) application server will determine the new terminating party to which a call to a given subscriber will be forwarded. In the case that an IFC indicates that a SIP message received at the S-CSCF should be forwarded to a particular SIP AS, that AS is added into the message path. Once the SIP message is returned by the AS to the S-CSCF, it is forwarded on towards its final destination, or forwarded to another AS if this is indicated in the IFCs.

3GPP TS 32.260 defines the IMS charging architecture and principles and thereby defines when to send charging information and when not to send charging information.

SIP re-INVITE and SIP UPDATE messages are used e.g. as bearers of the SDP information when a user wants to modify an established SIP session by adding, removing or changing the media. A user or the terminal can reject a received SDP offer, which results in a non-2xx final response (such as a 3xx, 4xx, 5xx or 6xx response).

The non-2xx final response leaves the session unchanged and therefore there is no need to change the charging of the session.

According to table 5.2.1.1 in 3GPP TS 32.260, the only offline charging information sent as a result of SIP re-INVITE and SIP UPDATE is at reception of SIP 200 OK acknowledging the requests. Offline charging is a post-paid type of charging scheme whereby charging is performed after a service has been consumed by the user; for example the user might receive a monthly bill showing chargeable items from the previous month.

According to table 5.3.1 in 3GPP TS 32.260, the only online charging information sent as a result of SIP re-INVITE and SIP UPDATE is at reception of SIP 200 OK acknowledging the requests, or at the actual reception of the requests. Online charging is a pre-paid type of charging scheme, where network entities would consult with the charging system before allowing a user access to the requested service.

The applicant has appreciated the following problem with the situation as it is currently specified.

3GPP TS 32.260 defines implicitly that no charging information shall be sent at unsuccessful responses to these requests, which denies the possibility of having a full traceability of e.g. unsuccessful SDP negotiations.

It is desirable to address the above-identified issue.

WO 2004/045195 discloses a method of preventing at least one of the calling party or the called party being charged where an attempt to set up a session has failed.

### SUMMARY OF THE INVENTION

According to a first aspect of the present invention there is provided a method for use in a telecommunications network that makes use of the Session Initiation Protocol, SIP, the method comprising sending charging information to a charging function of the network in response to the receipt of an unsuccessful SIP response to a SIP request, wherein the SIP request relates to a request to modify the media of an established SIP session, for example by adding, removing or changing the media, and wherein the unsuccessful SIP response is a non-2xx SIP response.

The SIP request may relate to a request to modify an established SIP session.

The SIP request may be a SIP UPDATE request. The SIP request may be a SIP re-INVITE request.

The unsuccessful SIP response may be a non-2xx SIP final response.

The unsuccessful SIP response may be a negative response to the SIP request.

The unsuccessful response may be a response indicating an unsuccessful procedure.

The unsuccessful response may be one at least partly rejecting the SIP request.

The method may comprise receiving the unsuccessful response.

The method may comprise sending the charging information outside an ongoing charging session.

The method may comprise correlating the charging information to the ongoing charging session with reference to a session identifier relating to the ongoing charging session.

The network may be a Universal Mobile Telecommunications System comprising an IP Multimedia Subsystem, IMS.

The charging function may comprise an IMS Charging Data Function, CDF.

The charging function may comprise an IMS Online Charging System, OCS.

The method may be performed by a Charging Triggering Function of the network.

According to a second aspect of the present invention there is provided an apparatus for use in a telecommunications network that makes use of the Session Initiation Protocol, SIP, the apparatus comprising means for sending charging information to a charging function of the network in response to the receipt of an unsuccessful SIP response to a SIP request, wherein the SIP request relates to a request to modify the media of an established SIP session, for example by adding, removing or changing the media, and wherein the unsuccessful SIP response is a non-2xx SIP response.

According to a third aspect of the present invention there is provided a program for controlling an apparatus to perform a method according to the first aspect of the present invention or which, when loaded into an apparatus, causes the apparatus to become an apparatus according to the second aspect of the present invention. The program may be carried on a carrier medium. The carrier medium may be a storage medium. The carrier medium may be a transmission medium.

According to a to fourth aspect of the present invention there is provided an apparatus programmed by a program according to the third aspect of the present invention.

According to a fifth aspect of the present invention there is provided a storage medium containing a program according to the third aspect of the present invention.

### BRIEF DESCRIPTION OF THE DRAWINGS

Figure 1, discussed hereinbefore, illustrates schematically the integration of an IP Multimedia Subsystem into a 3G mobile communications system;
Figure 2 is a schematic flowchart illustrating a method embodying the present invention;
Figure 3 is a schematic block diagram illustrating an apparatus embodying the present invention; and
Figure 4 illustrates an embodiment of the present invention in more detail.

The following abbreviations are used in the above Figures and elsewhere herein:

| | |
|---|---|
| ACA | Accounting Answer |
| ACR | Accounting Request |
| AVP | Attribute-Value-Pair |
| CCA | Credit-Control-Answer |
| CCR | Credit-Control-Request |
| CCRe | Credit-Control-Request (Event) |
| CDF | Charging Data Function |
| CTF | Charging Triggering Function |
| OCS | Online Charging System |
| SDP | Session Description Protocol |
| SIP | Session Initiation Protocol |

### DETAILED DESCRIPTION OF THE PREFERRED EMBODIMENTS

According to a basic concept underlying an embodiment of the present invention, the Charging Triggering Function (CTF) is able to send charging information to the Charging Function (CDF or OCS) for non-2xx final responses to SIP re-INVITE and SIP UPDATE received for established SIP sessions. The CTF is able, at reception of an unsuccessful response to SIP re-INVITE and SIP UPDATE, to send charging information for the event to the CDF or OCS. An example of such a response is a 4xx, 5xx or 6xx response; a 3xx response may be considered less applicable in this situation, as such a response should already have appeared at session establishment.

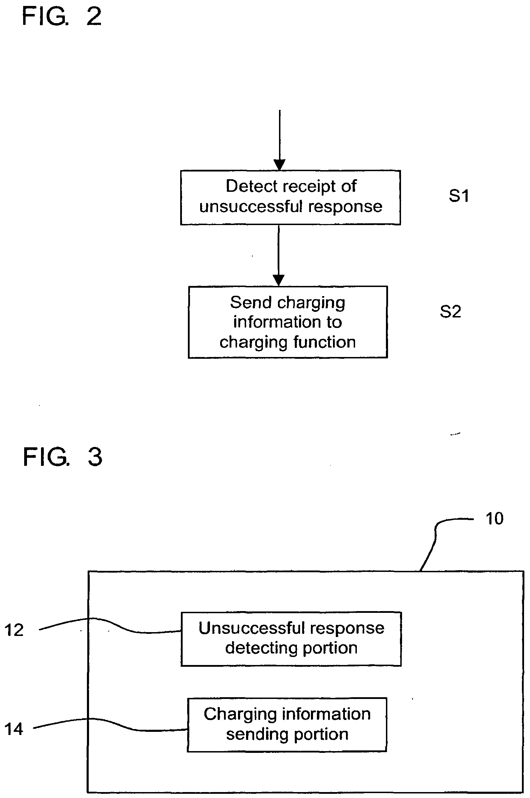

A method embodying the present invention is illustrated in Figure 2, and an apparatus embodying the present invention is illustrated in Figure 3. The apparatus in this embodiment is a Charging Triggering Function 10, comprising an unsuccessful response detecting portion 12 and a charging information sending portion 14. In step S1 of the method, the unsuccessful response detecting portion 12 of the Charging Triggering Function 10 detects receipt of an unsuccessful SIP response to a SIP request sent previously by a node of the network. In step S2 of the method, the charging information sending portion 14 of the Charging Triggering Function 10 sends, in response to the receipt mentioned above in respect of step S1, charging information to a Charging Function of the network.

The charging information can be sent either within the established charging session, or outside. The unsuccessful response is a session related event but it is not intended to affect the charging of the session. It is preferable, therefore, to send it outside the charging session but connect it to the ongoing charging session by re-using session identifiers to enable correlation. There would be a new ICID (IMS Charging Identifier) for the ACR/CCR but the call-id is the same. The call-id can then be used to relate to the ongoing charging session. A new AVP could be created to pass on the ICID of the ongoing charging session, which could make it easier to correlate the data, if required.

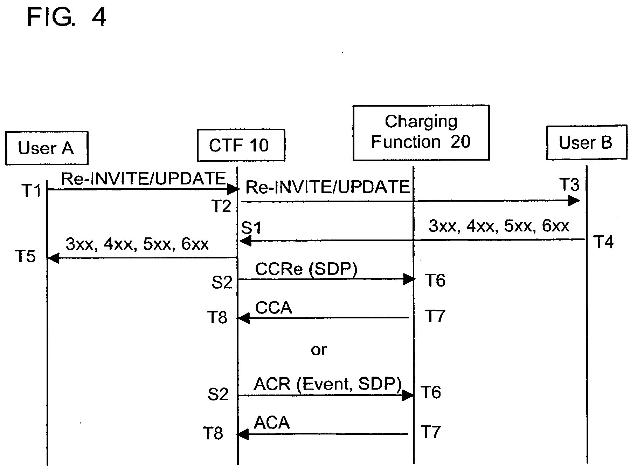

A more detailed embodiment of the present invention is illustrated in the signalling flow diagram of Figure 4, which also shows the correspondence to Figures 2 and 3 described above by the use of the same reference numerals where appropriate.

In step T1, User A sends a SIP Re-INVITE or UPDATE request to the Charging Triggering Function 10, which in step T2 is received by the Charging Triggering Function 10 and forwarded to User B.

Following receipt of the SIP Re-INVITE or UPDATE request in step T3 at User B, the request is rejected by sending an unsuccesful SIP response (e.g. a 3xx, 4xx, 5xx, 6xx response) in step T4 from User B.

The unsuccessful response is received and detected by the Charging Triggering Function 10 in step S1 and forwarded to User A. The unsuccessful response is received at User A in step T5.

In an online charging scenario, the charging function 20 depicted in Figure 4 is an Online Charging System; in this scenario, the following series of steps could occur. In response to receipt of the unsuccessful response in step S1, a CCRe (SDP) message is sent in step S2 from the Charging Triggering Function 10 and received at the Online Charging System 20 in step T6. The Online Charging System 20 responds in step T7 with a CCA response, which is received in step T8 by the Charging Triggering Function 10.

As an alternative to steps S2, T6, T7 and T8 described immediately above, in an offline charging scenario, where the charging function 20 would instead be a Charging Data Function, the following series of steps could occur. In response to receipt of the unsuccessful response in step S1, an ACR (SDP) message is sent in step S2 from the Charging Triggering Function 10 and received at the Charging Data Function 20 in step T6. The Charging Data Function 20 responds in step T7 with an ACA response, which is received in step T8 by the Charging Triggering Function 10.

Although an embodiment of the present invention is described above mainly in relation to SIP re-INVITE and SIP UPDATE messages, the invention is applicable to other types of SIP message as well. Although 3GPP mentions the Diameter protocol (e.g. ACR/ACA) in relation to the sending of charging data in the offline charging scenario, it will readily be apparent to the skilled person that the RADIUS protocol or another protocol such as FTP could be used to send a file with charging data in the offline charging scenario. It will also be readily apparent to the skilled person that an embodiment of the present invention need not be implemented in a CTF, but can be implemented in any suitable network node or function.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website. The appended claims are to be interpreted as covering an operating program by itself, or as a record on a carrier, or as a signal, or in any other form.

It will also be appreciated by the person of skill in the art that various modifications may be made to the above-described embodiments without departing from the scope of the present invention as defined by the appended claims. In particular, it will be appreciated that, although described in relation to a Universal Mobile Telecommunications System having an IP Multimedia Subsystem, the present invention is also applicable to other types of network.

## Claims

1. A method for use in a telecommunications network that makes use of the Session Initiation Protocol, SIP, the method being **characterised by** sending (S2) charging information to a charging function of the network in response to the receipt (S1) of an unsuccessful SIP response to a SIP request, wherein the SIP request relates to a request to modify the media of an established SIP session by adding, removing or changing the media, and wherein the unsuccessful SIP response is a non-2xx SIP response.

2. A method as claimed in claim 1, wherein the SIP request relates to a request to modify an established SIP session.

3. A method as claimed in claim 1 or 2, wherein the SIP request is a SIP UPDATE request.

4. A method as claimed in claim 1 or 2, wherein the SIP request is a SIP re-INVITE request.

5. A method as claimed in any preceding claim, wherein the unsuccessful SIP response is a non-2xx SIP final response.

6. A method as claimed in any preceding claim, wherein the unsuccessful SIP response is a negative response to the SIP request.

7. A method as claimed in any preceding claim, wherein the unsuccessful response is one at least partly rejecting the SIP request.

8. A method as claimed in any preceding claim, comprising receiving the unsuccessful response.

9. A method as claimed in any preceding claim, comprising sending the charging information outside an ongoing charging session.

10. A method as claimed in claim 9, comprising correlating the charging information to the ongoing charging session with reference to a session identifier relating to the ongoing charging session.

11. A method as claimed in any preceding claim, wherein the network is a Universal Mobile Telecommunications System comprising an IP Multimedia Subsystem, IMS.

12. A method as claimed in claim 11, wherein the charging function comprises an IMS Charging Data Function, CDF.

13. A method as claimed in claim 11, wherein the charging function comprises an IMS Online Charging System, OCS.

14. A method as claimed in claim 11, 12 or 13, the method being performed by a Charging Triggering Function of the network.

15. An apparatus for use in a telecommunications network that makes use of the Session Initiation Protocol, SIP, the apparatus being **characterised by** means (12, 14) for sending charging information to a charging function of the network in response to the receipt of an unsuccessful SIP response to a SIP request, wherein the SIP request relates to a request to modify the media of an established SIP session, by adding, removing or changing the media, and wherein the unsuccessful SIP response is a non-2xx SIP response.

16. A program for controlling an apparatus to perform a method as claimed in any one of claims 1 to 14, carried for example on a carrier medium such as a storage medium or a transmission medium.

17. A storage medium containing a program as claimed in claim 16.

## Patentansprüche

1. Methode zur Verwendung in einem Telekommunikationsnetzwerk, die das Session Initiation Protocol, SIP, verwendet, wobei die Methode **gekennzeichnet ist durch** ein Senden (S2) einer Gebühreninformation an eine Gebührenfunktion des Netzwerks als Reaktion auf den Empfang (S1) einer erfolglosen SIP-Antwort auf eine SIP-Anfrage, wobei sich die SIP-Anfrage auf eine Anfrage bezieht, die Medien einer etablierten SIP-Session **durch** Hinzufügen, Entfernen oder Ändern der Medien zu modifizieren, und wobei die erfolglose SIP-Antwort eine Nicht-2xx-SIP-Antwort ist.

2. Methode nach Anspruch 1, wobei die SIP-Anfrage sich auf eine Anfrage bezieht, eine etablierte SIP-Session zu modifizieren.

3. Methode nach Anspruch 1 oder 2, wobei die SIP-Anfrage eine SIP-UPDATE-Anfrage ist.

4. Methode nach Anspruch 1 oder 2, wobei die SIP-Anfrage eine SIP-re-INVITE-Anfrage ist.

5. Methode nach einem der vorhergehenden Ansprüche, wobei die erfolglose SIP-Antwort eine endgültige Nicht-2xx-SIP-Antwort ist.

6. Methode nach einem der vorhergehenden Ansprüche, wobei die erfolglose SIP-Antwort eine negative Antwort auf die SIP-Anfrage ist.

7. Methode nach einem der vorhergehenden Ansprüche, wobei die erfolglose Antwort eine solche ist, welche die SIP-Anfrage zumindest teilweise zurückweist.

8. Methode nach einem der vorhergehenden Ansprüche, umfassend den Empfang der erfolglosen Antwort.

9. Methode nach einem der vorhergehenden Ansprüche, umfassend das Senden der Gebühreninformation außerhalb einer laufenden Gebührensession.

10. Methode nach Anspruch 9, umfassend das Korrelieren der Gebühreninformation mit der laufenden Gebührensession unter Bezugnahme auf eine Session-Kennung, welche sich auf die laufende Gebührensession bezieht.

11. Methode nach einem der vorhergehenden Ansprüche, wobei das Netzwerk ein Universelles Mobiles Telekommunikationssystem ist, das ein IP-Multimedia-Subsystem, IMS, umfasst.

12. Methode nach Anspruch 11, wobei die Gebührenfunktion eine IMS-Gebührenfunktion, CDF, umfasst.

13. Methode nach Anspruch 11, wobei die Gebührenfunktion ein IMS-Online-Gebührensystem, OCS, umfasst.

14. Methode nach Anspruch 11, 12 oder 13, wobei die Methode durch eine Gebührenauslösefunktion des Netzwerks durchgeführt wird.

15. Vorrichtung zur Verwendung in einem Telekommunikationsnetzwerk, die das Session Initiation Protocol, SIP, verwendet, wobei die Vorrichtung **gekennzeichnet ist durch** Mittel (12, 14) zum Senden von Gebühreninformationen an eine Gebührenfunktion des Netzwerks als Antwort auf den Empfang einer erfolglosen SIP-Antwort auf eine SIP-Anfrage, wobei die SIP-Anfrage sich auf eine Anfrage bezieht, die Medien einer etablierten SIP-Session **durch** Hinzufügen, Entfernen oder Ändern der Medien zu modifizieren, und wobei die erfolglose SIP-Antwort eine Nicht-2xx-SIP-Antwort ist.

16. Programm für das Steuern einer Vorrichtung, um eine Methode nach einem der Ansprüche 1 bis 14 durchzuführen, das sich beispielsweise auf einem Trägermedium, wie beispielsweise einem Speichermedium oder einem Übertragungsmedium, befindet.

17. Speichermedium, welches ein Programm nach Anspruch 16 enthält.

## Revendications

1. Procédé destiné à être utilisé dans un réseau de télécommunication qui fait usage du protocole d'ouverture de session, SIP, le procédé étant **caractérisé par** l'étape consistant à envoyer (S2) des informations de taxation à une fonction de taxation du réseau, en réponse à la réception (S1) d'une réponse de protocole SIP infructueuse à une demande de protocole SIP, dans lequel la demande de protocole SIP se rapporte à une demande visant à modifier le média d'une session de protocole SIP établie, en ajoutant, en supprimant ou en modifiant le média, et dans lequel la réponse de protocole SIP infructueuse est une réponse SIP « non-2xx ».

2. Procédé selon la revendication 1, dans lequel la demande de protocole SIP se rapporte à une demande visant à modifier une session de protocole SIP établie.

3. Procédé selon la revendication 1 ou 2, dans lequel la demande de protocole SIP correspond à une demande de mise à jour de protocole SIP « SIP UPDATE ».

4. Procédé selon la revendication 1 ou 2, dans lequel la demande de protocole SIP correspond à une demande de renouvellement d'invitation de protocole SIP « SIP re-INVITE ».

5. Procédé selon l'une quelconque des revendications précédentes, dans lequel la réponse de protocole SIP infructueuse est une réponse finale de protocole SIP « non-2xx ».

6. Procédé selon l'une quelconque des revendications précédentes, dans lequel la réponse de protocole SIP infructueuse correspond à une réponse négative à la demande de protocole SIP.

7. Procédé selon l'une quelconque des revendications précédentes, dans lequel la réponse infructueuse correspond à une réponse rejetant au moins partiellement la demande de protocole SIP.

8. Procédé selon l'une quelconque des revendications précédentes, comprenant l'étape consistant à recevoir la réponse infructueuse.

9. Procédé selon l'une quelconque des revendications précédentes, comprenant l'étape consistant à envoyer les informations de taxation en dehors d'une session de taxation en cours.

10. Procédé selon la revendication 9, comprenant l'étape consistant à corréler les informations de taxation avec la session de taxation en cours, en référence à un identifiant de session connexe à la session de taxation en cours.

11. Procédé selon l'une quelconque des revendications précédentes, dans lequel le réseau est un système universel de télécommunication avec les mobiles comprenant un sous-système multimédia IP, IMS.

12. Procédé selon la revendication 11, dans lequel la fonction de taxation comporte une fonction de données de taxation, CDF, de sous-système IMS.

13. Procédé selon la revendication 11, dans lequel la fonction de taxation comporte un système de taxation en ligne, OCS, de sous-système IMS.

14. Procédé selon la revendication 11, 12 ou 13, dans lequel le procédé est mis en oeuvre par une fonction de déclenchement de taxation du réseau.

15. Appareil destiné à être utilisé dans un réseau de télécommunication qui fait usage du protocole d'ouverture de session, SIP, l'appareil étant **caractérisé par** des moyens (12, 14) pour envoyer des informations de taxation à une fonction de taxation du réseau, en réponse à la réception d'une réponse de protocole SIP infructueuse à une demande de protocole SIP, dans lequel la demande de protocole SIP se rapporte à une demande visant à modifier le média d'une session de protocole SIP établie, en ajoutant, en supprimant ou en modifiant le média, et dans lequel la réponse de protocole SIP infructueuse est une réponse SIP « non-2xx ».

16. Programme destiné à commander à un appareil de mettre en oeuvre un procédé selon l'une quelconque des revendications 1 à 14, porté par exemple sur un support de transport, tel qu'un support de stockage ou un support de transmission.

17. Support de stockage contenant un programme selon la revendication 16.
